# FASCICULE DE BREVET EUROPEEN

(11) **EP 0 614 778 B1**
(45) Date de publication et mention de la délivrance du brevet: **06.08.1997**
(21) Numéro de dépôt: 94400426.6
(22) Date de dépôt: 01.03.1994
(51) Int. Cl.: B60K 17/16, F16H 48/08, F16H 57/02

(54) **Différentiel de transmission pour boîte de vitesses étanche**
Differentialgetriebe für ein flüssigkeitsdichtes Getriebegehäuse
Differential gearing for a fluid-tight gearbox

(30) Priorité: 09.03.1993 FR 9302688
(43) Date de publication de la demande: 14.09.1994
(73) Titulaire: REGIE NATIONALE DES USINES RENAULT S.A., 92109 Boulogne Billancourt (FR); AUTOMOBILES PEUGEOT, 75116 Paris (FR); AUTOMOBILES CITROEN, 92200 Neuilly-sur-Seine (FR)
(72) Inventeur: Minaud, Michel, F-78990 Elancourt (FR); Melard, Jean-Yves, F-92130 Issy-les-Moulineaux (FR)
(74) Mandataire: Ernst-Schonberg, Michel

(56) Documents cités:
- EP-A- 0 352 526
- WO-A-92/14949
- DE-A- 3 741 746
- FR-A- 2 215 857
- JP-A-60 116 528
- US-A- 1 810 194
- PATENT ABSTRACTS OF JAPAN vol. 7, no. 112 (M-215) 17 Mai 1983 & JP-A-58 034 267 (NISSAN JIDOSHA) 28 Février 1983

## Description

La présente invention concerne un différentiel de transmission, tel qu'un différentiel de train avant de véhicule tracté à groupe motopropulseur transversal. Elle a notamment pour objet un différentiel monté en sortie d'une boîte de vitesses "étanche", ce qui signifie que la boîte de vitesses est destinée à être remplie d'huile après le montage du différentiel sur celle-ci, mais avant son propre montage sur le véhicule.

L'implantation d'un groupe moto-propulseur transversal dans un compartiment moteur de véhicule automobile se traduit, au niveau de la transmission, par des contraintes d'architecture particulières, liées notamment au décentrage du différentiel, par rapport à l'axe longitudinal du véhicule et à son décalage par rapport à l'axe des roues avant. En effet, lorsque le différentiel est décalé latéralement, les deux arbres d'entraînement des roues avant n'ont pas la même longueur. L'angle qu'ils forment avec l'axe de la ligne d'arbre du différentiel est donc différent. Si l'un d'eux dépasse les limites admises pour une bonne transmission du mouvement, l'angularité excessive de la ligne de transmission correspondante peut générer un "martèlement", inacceptable en terme de qualité.

Les constructeurs automobiles s'efforcent donc de placer les points d'articulation des arbres de roue avant le plus près possible de l'axe de symétrie longitudinal du véhicule, de façon à réduire la différence de longueur existant entre les deux arbres d'entraînement des roues. Toutefois, la position du différentiel dans le compartiment moteur est déterminée par l'implantation du groupe motopropulseur. En conséquence, les possibilités d'adaptation des autres éléments de transmission, et notamment du différentiel, sont réduites. Lorsque l'entrée du mouvement dans le différentiel s'effectue par la couronne du pont avant (dont l'emplacement est imposé par la sortie de mouvement de la boîte de vitesses), le rééquilibrage de la transmission doit donc être recherché en modifiant d'autres éléments du différentiel et/ou d'autres organes de transmission du mouvement en direction des roues.

Conformément à la publication WO-9214949, certains différentiels comportent un boîtier complété par un couvercle de fermeture vissé sur celui-ci.

La présente invention vise à résoudre le problème d'angularité d'une ligne de transmission évoqué ci-dessus, dans le cas d'un différentiel à couvercle de fermeture vissé sur le boîtier.

Elle concerne un différentiel de transmission monté en sortie d'une boîte de vitesses et maintenu axialement par des premiers et des seconds roulements vis-à-vis du carter de mécanisme de la boîte de vitesses et d'un carter de différentiel, comportant un boîtier de différentiel supportant une couronne d'entrée de mouvement et un couvercle qui ferme ledit boîtier sur un ensemble de satellites entraînés en rotation autour d'un axe pour assurer la répartition du mouvement entre deux planétaires de sortie coaxiaux.

Ce différentiel est caractérisé en ce que :
- les premiers et les seconds roulements sont portés par le boîtier,
- le couvercle est fixé sur le boîtier par des moyens distincts de ceux de la couronne, et
- la couronne est déportée latéralement vers l'extérieur par rapport au couvercle, de façon à se trouver en porte-à-faux vis-à-vis des premiers et des seconds roulements.

Selon un mode de réalisation particulier de l'invention, le boîtier du différentiel est supporté par des premiers et des seconds roulements, assurant respectivement son appui autour du carter de mécanisme de la transmission, et son centrage à l'intérieur du carter de convertisseur.

L'invention sera mieux comprise à la lecture suivante de la description d'un mode de réalisation particulier de celle-ci, en liaison avec les dessins annexés, sur lesquels :
- la figure 1 est une coupe longitudinale du différentiel de l'invention, et
- les figures 2 à 5, illustrent des variantes de celui-ci, relatives au support du boîtier sur le carter de mécanisme de la transmission, et à la fixation du couvercle sur le boîtier du différentiel.

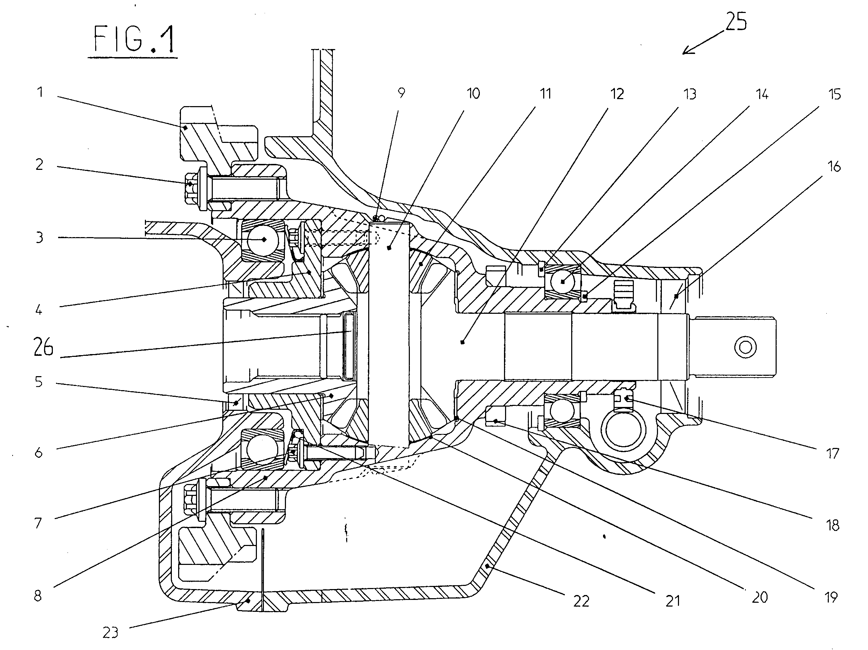

Sur la figure 1, on a représenté un différentiel de transmission 25, dont la couronne 1 est fixée au moyen de vis 2, sur le boîtier 8 de celui-ci. Le boîtier 8 est fermé par un couvercle 4, fixé par ses propres vis de fixation 7, sur le différentiel 25. Il renferme, de façon classique, des satellites 11, qu'il entraîne en rotation autour d'un axe 10, arrêté par des joncs 9, de façon à assurer la répartition du mouvement entre deux planétaires de sortie coaxiaux creux 6 et 12, reliés, par des articulations non représentées, aux arbres d'entraînement de roues.

Le boîtier 8 du différentiel 25 est supporté par deux ensembles de roulements 3 et 14, assurant respectivement son maintien axial en rotation vis à vis du carter de mécanisme 23 de la boîte de vitesses (non représentée), et vis-à-vis du carter de convertisseur 22. Le premier ensemble de roulements 3 est disposé autour du carter de mécanisme 23, et sous le boîtier 8, mais cependant à l'extérieur de celui-ci. Le second ensemble de roulements 4 est disposé de façon classique entre l'extérieur du boîtier 8, et l'intérieur du carter de convertisseur 22. Il est immobilisé axialement par un anneau d'arrêt intérieur 13 et par un anneau d'arrêt extérieur 15.

La référence 5 désigne le joint d'étanchéité de sortie gauche du différentiel 25, tandis que la référence 16 désigne le joint d'étanchéité de sortie droite de celui-ci, et que la référence 26 désigne une capsule assurant l'étanchéité du différentiel au niveau du planétaire gauche 6. Grâce à la capsule 26 et aux autres éléments d'étanchéité mentionnés, le différentiel et la boîte de vitesses sur laquelle il est monté constituent un ensemble étanche, pouvant être rempli d'huile avant son montage sur le véhicule. Enfin, on a fait figurer sur la coupe, un tachymètre mécanique 17 et la cible 18 d'un tachymètre électronique, ainsi que la rondelle d'appui 19 du planétaire droit 12, et une rondelle de précontrainte 21 de la ligne de différentiel.

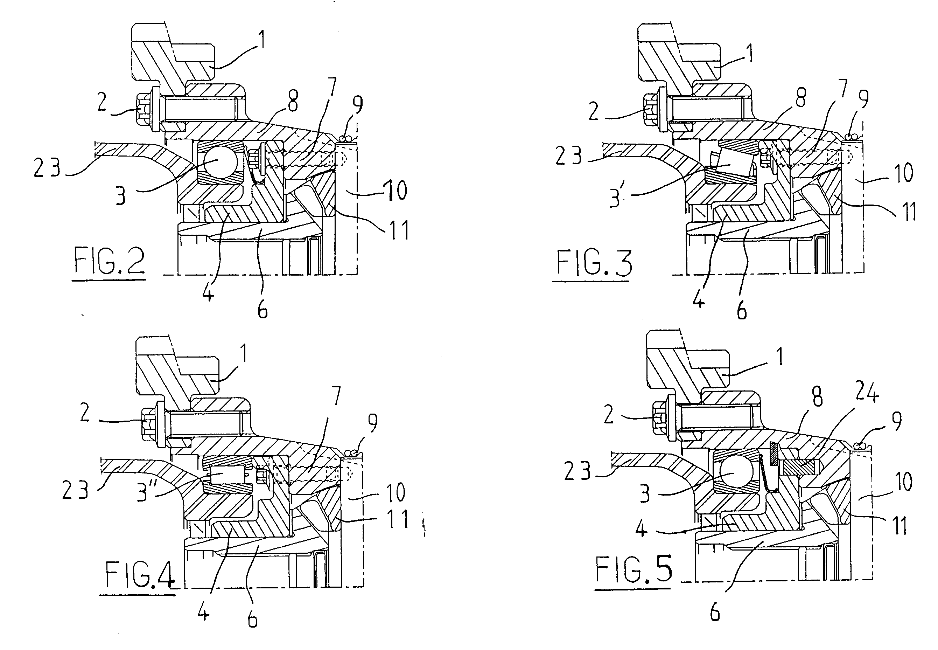

La figure 2 correspond à la partie supérieure gauche de la figure 1. Elle illustre donc le même mode de réalisation que celle-ci, selon lequel les roulements de support du boîtier 8 sur le carter de mécanisme 23 sont des roulements à billes, et le couvercle 4 est fixé au moyen de vis 7 sur le boîtier 8. En revanche, les figures 3, 4 et 5, illustrent des variantes de l'invention. Sur la figure 3, la fixation du couvercle 4 sur le boîtier 8 est inchangée, mais les roulements à billes 3 ont été remplacés par des roulements coniques 3'. Sur la figure 4 on retrouve les vis de fixation 7 du couvercle 4 sur le boîtier 8, mais les roulements 3'' sont des roulements à rouleaux cylindriques. Enfin la figure 5 reprend les roulements à billes des figures 1 et 2, mais le couvercle est désormais fixé au moyen d'un clips 24, sur le boîtier 8.

Le différentiel 25 proposé par l'invention comporte donc un boîtier de différentiel gauche 4 réduit à un simple couvercle de fermeture. Ce couvercle 4 ne porte pas de roulements. Il est fixé sur le boîtier de différentiel 8 par des vis de fixation 2, indépendantes des vis de fixation 7 de la couronne de pont 1 sur le boîtier 8. Cette solution permet d'augmenter le porte-à-faux de la couronne 1 par rapport aux deux ensembles de roulements 3, 14 du différentiel, autant que nécessaire pour pouvoir rallonger l'arbre d'entraînement de roue avant le plus court, sans avoir recours à un demi boîtier droit de différentiel, de structure complexe.

Enfin, parmi les nombreux avantages de l'invention, il faut souligner les points suivants :
- les deux roulements de la ligne d'arbre de différentiel sont centrés sur la même pièce - le boîtier de différentiel -, ce qui permet de réduire les défauts de coaxialité entre les roulements et d'augmenter la rigidité de l'ensemble,
- la couronne est centrée sur ce même boîtier de différentiel, ce qui assure une bonne coaxialité entre la couronne et l'axe de la ligne d'arbre de différentiel,
- le montage proposé est compatible avec une grande variété de types de roulements (cf figures 2 à 4),
- le couvercle est de structure simple, donc bon marché,
- les vis de fixation de la couronne ne sont pas soumises aux efforts axiaux du planétaire gauche. et
- l'étanchéité de l'ensemble boîte de vitesses-différentiel est assurée de façon simple par la mise en place d'une capsule à l'intérieur du planétaire gauche.

## Revendications

1. Différentiel de transmission monté en sortie d'une boîte de vitesses et maintenu axialement par des premiers et des seconds roulements (3, 3', 3'', 14) vis-à-vis du carter de mécanisme de la boîte de vitesses (23) et d'un carter de différentiel 22, comportant un boîtier de différentiel (8) supportant une couronne d'entrée de mouvement (1) et un couvercle (4) qui ferme ledit boîtier (8) sur un ensemble de satellites (11) entraînés en rotation autour d'un axe pour assurer la répartition du mouvement entre deux planétaires de sortie coaxiaux,
caractérisé en ce que :
- les premiers et les seconds roulements (3, 3', 3'', 14) sont portés par le boîtier (8),
- le couvercle (4) est fixé sur le boîtier (8) par des moyens distincts de ceux de la couronne (1),
- et la couronne (1) est déportée latéralement vers l'extérieur par rapport au couvercle (4), de façon à se trouver en porte-à-faux vis-à-vis des premiers et des seconds roulements (3, 3', 3'' et 14).

2. Différentiel de transmission selon la revendication 1, caractérisé en ce que la fixation de la couronne (1) sur le boîtier (8) et celle du couvercle (4) sur le boîtier (8) sont assurées respectivement par des premières et par des secondes vis de fixation (2, 7).

3. Différentiel de transmission selon la revendication 1 ou 2, caractérisé en ce que la couronne (1) est fixée par des vis (2) sur le boîtier (8), tandis que le couvercle (4) est maintenu par un clips (24), sur celui-ci.

4. Différentiel de transmission selon la revendication 1 ou 2, caractérisé en ce que les premiers roulements (3) sont des roulements à billes.

5. Différentiel de transmission selon la revendication 1, 2 ou 3, caractérisé en ce que les premiers roulements sont des roulements coniques (3').

6. Différentiel de transmission selon les revendications 1, 2 ou 3, caractérisé en ce que les premiers roulements sont des roulements coniques (3'').

## Claims

1. A transmission differential mounted as output from a gear box and retained axially by first and second bearings (3, 3', 3'', 14) with respect to the gear box mechanism casing (23) and a differential casing (22), comprising a differential housing (8) supporting a movement input crown gear (1) and a cover (4) which closes the housing (8) on an assembly of satellites (11) driven in rotation about an axis in order to ensure the distribution of the movement between two coaxial output planetary gears,
characterised in that:
• the first and second bearings (3, 3', 3'', 14) are supported by the housing (8),
• the cover (4) is secured on the housing (8) by means separate from those of the crown gear (1),
• the crown gear (1) is offset laterally outwards with respect to the cover (4) so that it projects with respect to the first and second bearings (3, 3', 3'', 14).

2. A transmission differential as claimed in claim 1, characterised in that the fastening of the crown gear (1) on the housing (8) and that of the cover (4) on the housing (8) are provided by first and second fastening screws (2, 7) respectively.

3. A transmission differential as claimed in claim 1 or 2, characterised in that the crown gear (1) is secured by screws (2) on the housing (8), while the cover (4) is held thereon by a clip (24).

4. A transmission differential as claimed in claim 1 or 2, characterised in that the first bearings (3) are ball bearings.

5. A transmission differential as claimed in claims 1, 2 or 3, characterised in that the first bearings are conical bearings (3').

6. A transmission differential as claimed in claims 1, 2 or 3, characterised in that the first bearings are conical bearings (3'').

## Patentansprüche

1. Differentialgetriebe, das am Ausgang eines Schaltgetriebes angeordnet ist und das axial von ersten und zweiten Lagern (3, 3', 3'', 14) gegenüber einem Schaltgetriebe (23) und einem Gehäuse (22) getragen wird, wobei ein Differentialgehäuseteil (8), welcher einen Antriebsflansch (1) und eine Abdeckung (4) aufweist, die das Gehäuseteil (8) verschliesst bezüglich einer Satellitenanordnung (11), die sich um eine Achse dreht zur Verteilung des Antriebs zwischen zwei koaxialen Ausgangsplanetenrädern,
dadurch gekennzeichnet, dass
- die ersten und die zweiten Lager (3, 3', 3'', 14) vom Gehäuseteil (8) getragen werden,
- die Abdeckung (4) am Gehäuseteil (8) mittels einer Anordnung befestigt ist, die von derjenigen des Flansches (1) unterschiedlich ist, und
- der Flansch (1) seitlich nach aussen bezüglich der Abdeckung (4) derart verschoben ist, dass er hinsichtlich der ersten und zweiten Lager übersteht.

2. Differentialgetriebe nach Anspruch 1, dadurch gekennzeichnet, dass die Befestigung des Flansches (1) am Gehäuseteil (8) und diejenige der Abdeckung (4) am Gehäuseteil (8) durch erste bzw. zweite Befestigungsschrauben (2, 7) erfolgt.

3. Differentialgetriebe nach Anspruch 1 oder 2, dadurch gekennzeichnet, dass der Flansch (1) mittels Schrauben (2) am Gehäuseteil (8) befestigt ist, während die Abdeckung (4) mittels Klammern (24) an ihm gehalten wird.

4. Differentialgetriebe nach Anspruch 1 oder 2, dadurch gekennzeichnet, dass die ersten Lager (3) Kugellager sind.

5. Differentialgetriebe nach Anspruch 1, 2 oder 3, dadurch gekennzeichnet, dass die ersten Lager Kegelrollenlager (3') sind.

6. Differentialgetriebe nach Ansprüchen 1, 2 oder 2, dadurch gekennzeichnet, dass die ersten Lager Zylinderrollenlager (3'') sind.
